# EUROPEAN PATENT APPLICATION

(11) **EP 4 718 281 A1**
(43) Date of publication of application: **01.04.2026**
(21) Application number: 25205491.1
(22) Date of filing: 29.09.2025
(51) Int. Cl.: G06F 16/901

(54) **KEY VALUE PAIR STORAGE METHODS FOR GRAPH DATA AND GRAPH DATA PREFETCHING METHODS**

(30) Priority: 29.09.2024 CN 202411379642
(71) Applicant: Alipay (Hangzhou) Digital Service Technology Co., Ltd., Hangzhou, Zhejiang 310000 (CN)
(72) Inventor: WANG, Shaofei, Hangzhou, Zhejiang, 310000 (CN)
(74) Representative: Fish & Richardson P.C.

(57) **Abstract**

One or more embodiments of this specification provides key-value pair storage methods for graph data and graph data prefetching methods. The key-value pair storage method for graph data includes: obtaining a plurality of graph composition element key-value pairs, where in any graph composition element key-value pair, a value corresponds to graph composition element data of a corresponding graph composition element in graph data, a key includes a plurality of identifier fields, and one of the identifier fields is a category identifier of the corresponding graph composition element, where graph composition elements corresponding to the plurality of graph composition element key-value pairs include nodes and/or edges; and storing graph composition element key-value pairs in the plurality of graph composition element key-value pairs in an orderly way based on an arrangement sequence of category identifiers included in corresponding keys.

## Description

### TECHNICAL FIELD

One or more embodiments of this specification relate to the field of graph data, and in particular, to key-value pair storage methods for graph data and graph data prefetching methods.

### BACKGROUND

Graph data is a data organization model that is based on a graph structure in graph theory. Due to its ability to represent various entities and relationships of the entities in a real world, the graph data exhibits obvious advantages during processing of highly interconnected data, and is widely used in a plurality of fields such as knowledge graphs, social network analysis, and financial services.

However, currently, as the scale of graph data continues to expand and the complexity of analysis needs constantly increases, a related system needs to read and process a large amount of data in a process of performing analysis based on the graph data, leading to frequent hard disk reading operations and consequently impacting overall performance.

### SUMMARY

In view of this, one or more embodiments of this specification provide key-value pair storage methods for graph data and graph data prefetching methods.

To achieve the above-mentioned objective, one or more embodiments of this specification provide the following technical solutions:

According to a first aspect of one or more embodiments of this specification, a key-value pair storage method for graph data is provided, including: obtaining a plurality of graph composition element key-value pairs, where in any graph composition element key-value pair, a value corresponds to graph composition element data of a corresponding graph composition element in graph data, a key includes a plurality of identifier fields, and one of the identifier fields is a category identifier of the corresponding graph composition element, where graph composition elements corresponding to the plurality of graph composition element key-value pairs include nodes and/or edges; and storing graph composition element key-value pairs in the plurality of graph composition element key-value pairs in an orderly way based on an arrangement sequence of category identifiers included in corresponding keys.

According to a second aspect of one or more embodiments of this specification, a graph data prefetching method is provided, including: receiving a graph data read request for a graph database, where the graph database stores a plurality of graph composition element key-value pairs, the graph composition element key-value pairs are stored in an orderly way based on an arrangement sequence of category identifiers included in corresponding keys, and for any graph composition element key-value pair, a value corresponds to graph composition element data of a corresponding graph composition element in graph data, a key includes a plurality of identifier fields, and one of the identifier fields is a category identifier of the corresponding graph composition element, where graph composition elements corresponding to the plurality of graph composition element key-value pairs include nodes and/or edges; determining a key in a matched graph composition element key-value pair and a storage address of a corresponding graph composition element key-value pair from the plurality of graph composition element key-value pairs; and reading, for a prefetching address range that matches the determined storage address of the graph composition element key-value pair, a graph composition element key-value pair stored in the prefetching address range.

According to a third aspect of one or more embodiments of this specification, an electronic device is provided and includes: a processor, and a storage configured to store instructions executable by the processor. The processor runs the executable instructions to implement the steps of the method according to the first aspect or the second aspect.

According to a fourth aspect of one or more embodiments of this specification, a computer-readable storage medium on which a computer program is stored is provided. When the computer program is executed by a processor, the steps of the method according to the first aspect or the second aspect are implemented.

According to a fifth aspect of one or more embodiments of this specification, a computer program product including a computer program/instructions is provided. When the computer program/instructions is/are executed by a processor, the method according to the first aspect or the second aspect is implemented.

In the technical solutions provided in this specification, when data of a graph composition element in a graph is stored as a key-value pair, a form of a key that is in each graph composition element key-value pair and that includes a plurality of identifier fields is organized, a category identifier is used as one of the identifier fields, and then graph composition element key-value pairs are stored in an orderly way based on an arrangement sequence of category identifiers included in a plurality of keys. Based on the technical solutions in this specification, data of graph composition elements in a graph can be stored in a centralized and orderly way, to ensure that graph composition element key-value pairs of a same category can be continuously stored on adjacent physical locations in a storage medium. During reading of target data, if data stored on adjacent physical locations of the target data is pre-read, correlation between the pre-read data and the target data can be improved. Therefore, after the pre-read data is cached, a hit rate of subsequent cached data can be improved, thereby avoiding frequent hard disk reading operations, and significantly improving graph data reading efficiency.

It should be understood that the above-mentioned general descriptions and the following detailed descriptions are only exemplary and explanatory, and cannot limit the embodiments of this specification.

### BRIEF DESCRIPTION OF THE DRAWINGS

FIG. 1 is a schematic diagram illustrating an overall architecture, according to one or more example embodiments.
FIG. 2 is a flowchart illustrating a key-value pair storage method for graph data, according to one or more example embodiments.
FIG. 3 is a schematic diagram illustrating a graph structure, according to one or more example embodiments.
FIG. 4 is a schematic diagram illustrating a key including a graph composition element type identifier, according to one or more example embodiments.
FIG. 5 is a schematic diagram illustrating a key including a time window identifier, according to one or more example embodiments.
FIG. 6 is a schematic diagram illustrating a key including a placeholder, according to one or more example embodiments.
FIG. 7 is a flowchart illustrating a graph data prefetching method, according to one or more example embodiments.
FIG. 8 is a schematic diagram illustrating a structure of a device, according to one or more example embodiments.
FIG. 9 is a block diagram illustrating a key-value pair storage apparatus for graph data, according to one or more example embodiments.
FIG. 10 is a block diagram illustrating a graph data prefetching apparatus, according to one or more example embodiments.

### DETAILED DESCRIPTION OF EMBODIMENTS

Example embodiments are described in detail here, and examples of the example embodiments are presented in the accompanying drawings. When the following description relates to the accompanying drawings, unless specified otherwise, same numbers in different accompanying drawings represent same or similar elements. Implementations described in the following example embodiments do not represent all implementations consistent with one or more embodiments of this specification. On the contrary, the implementations are only examples of apparatuses and methods that are described in the appended claims in detail and consistent with some aspects of one or more embodiments of this specification.

It is worthwhile to note that, steps of corresponding methods in other embodiments are not necessarily performed in the sequence shown and described in this specification. Methods in some other embodiments can include more or fewer steps than those described in this specification. In addition, a single step described in this specification may be divided into a plurality of steps for description in other embodiments, and a plurality of steps described in this specification may also be combined into a single step for description in other embodiments.

User information (including but not limited to user device information, personal information of a user, etc.) and data (including but not limited to data used for analysis, stored data, displayed data, etc.) used in this specification are information and data that are authorized by the user or fully authorized by each party, related data needs to be collected, used, and processed by abiding by related laws and regulations and standards of a related country and region, and a corresponding operation entry is provided, so that the user chooses to perform authorization or rejection.

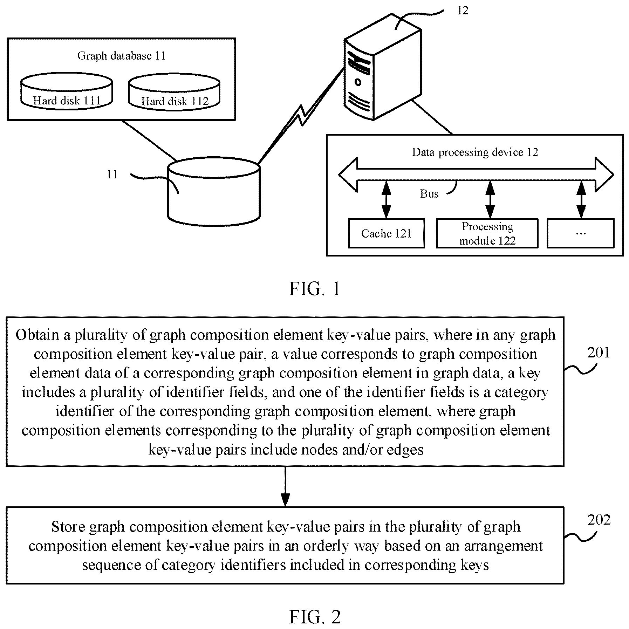

FIG. 1 is a schematic diagram illustrating an overall architecture, according to one or more example embodiments. As shown in FIG. 1, this architecture can include a graph database 11 and a data processing device 12. The graph database 11 can include one or more storage mediums, such as a hard disk 111 and a hard disk 112. The data processing device 12 can include a cache 121 and a processing module 122. The processing module 122 can be specifically a central processing unit (CPU) or a graphics processing unit (GPU). Certainly, the data processing device further includes another necessary component, such as a bus or a network interface card. Details are omitted here for simplicity.

When the processing module 122 in the data processing device 12 needs to process graph data, the processing module 122 needs to first read graph data related to a current processing operation from a hard disk (such as the hard disk 111) installed in the graph database 11. Here, the data can be referred to as target data. In a modem computer system, to reduce a quantity of times of reading the hard disk 111, during reading of the target data, other data whose storage address is adjacent to a storage address of the target data is read to the cache 121 together. When new target data needs to be read subsequently, data stored in the cache 121 is searched first, and if corresponding data fails to be found, the data is read from the hard disk 111.

In a process of performing analysis based on the graph data, after target data of a certain category is read, it is likely to access other data of the same category or related to the target data. However, in a related technology, because a storage structure of the graph data is not organized, data prefetched to the cache 121 is not data of the same category as the target data or related to the target data, and consequently, a cache hit rate is low, and frequent hard disk reading operations still need to be performed. Because the scale of the graph data currently continues to expand and the complexity of analysis needs constantly increase, frequent hard disk reading operations significantly reduce overall performance.

Therefore, to solve the above-mentioned problem, this specification proposes key-value pair storage methods for graph data, which can store data of graph composition elements in a graph in a centralized and orderly way, to ensure that graph composition element key-value pairs of a same category can be continuously stored on adjacent physical locations in a storage medium. During reading of target data, if data stored on adjacent physical locations of the target data is pre-read, correlation between the pre-read data and the target data can be improved. Therefore, after the pre-read data is cached, a hit rate of subsequent cached data can be improved, thereby avoiding frequent hard disk reading operations, and significantly improving graph data reading efficiency.

FIG. 2 is a flowchart illustrating a key-value pair storage method for graph data, according to one or more example embodiments. As shown in FIG. 2, the method can include the following steps:

Step 201: Obtain a plurality of graph composition element key-value pairs, where in any graph composition element key-value pair, a value corresponds to graph composition element data of a corresponding graph composition element in graph data, a key includes a plurality of identifier fields, and one of the identifier fields is a category identifier of the corresponding graph composition element, where graph composition elements corresponding to the plurality of graph composition element key-value pairs include nodes and/or edges.

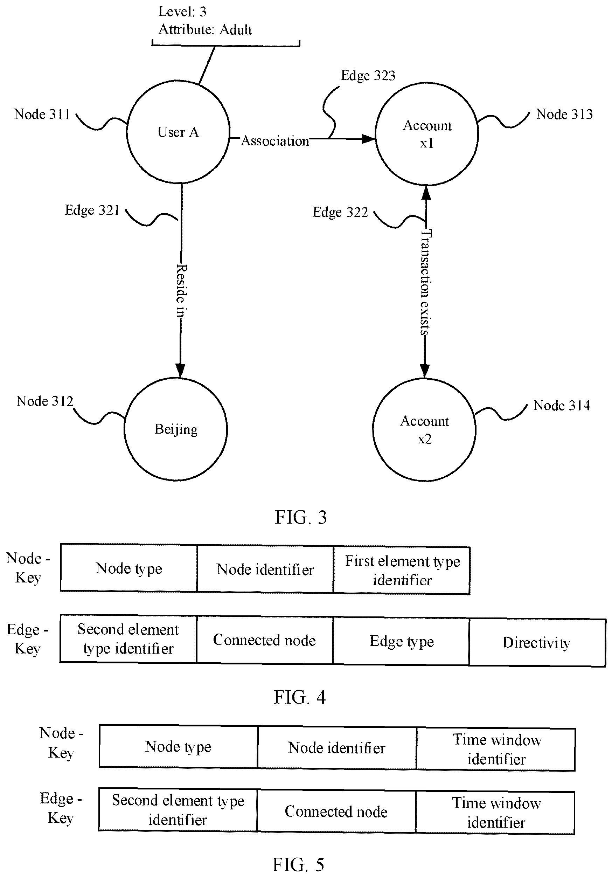

Specifically, a graph structure can include one or more graph composition elements, and any graph composition element can be any node in a graph, or can be any edge in a graph. In specific applications, any node can be used to represent each entity, such as a user, a company, or a location, and each entity can also have its own information, such as an attribute or a level. The edge can be used to represent an association, i.e., a relationship, between different entities, such as "User A (entity/node) resides in (relationship/edge) Beijing (entity/node)" or "A transaction exists (relationship/edge) between account x1 (entity/node) and account x2 (entity/node)." More specifically, nodes included in the graph can be distinguished based on node types of the nodes, and edges included in the graph are distinguished based on edge types of the edges. FIG. 3 is a schematic diagram illustrating a graph structure, according to one or more example embodiments. As shown in FIG. 3, the graph can include one or more nodes, which respectively correspond to entities represented by the one or more nodes, such as user A (node 311), Beijing (node 312), account x1 (node 313), and account x2 (node 314); and the graph can also include edges, which respectively correspond to relationships between entities represented by the edges, such as "reside in" (edge 321) and "transaction exists" (edge 322). An entity represented by node 311 is user A, and an entity represented by node 312 is Beijing, and in this case, node 311 and node 312 are nodes of different types. A relationship represented by edge 321 is "reside in", and a relationship represented by edge 322 is "transaction exists", and in this case, edge 321 and edge 322 are edges of different types.

In one or more embodiments, any graph composition element in the graph and corresponding data are represented and stored by using a graph composition element key-value pair. A graph composition element in any one of the plurality of graph composition element key-value pairs can be a node in the graph, or can be an edge in the graph. All graph composition elements corresponding to the plurality of obtained graph composition element key-value pairs can include both a node and an edge in the graph.

Specifically, a value in any graph composition element key-value pair is graph composition element data of a corresponding graph composition element. When the graph composition element is any node, the value in the graph composition element key-value pair is node data of the node. When the graph composition element is any edge, the value in the graph composition element key-value pair is edge data of the edge. In addition, graph composition element data corresponding to a value in any graph composition element key-value pair can also be organized by using a plurality of data structures, such as a structure or an array; or one or more key-value pairs can be nested again, to record information such as an attribute and a weight of the graph composition element. A person skilled in the art can choose based on actual conditions and needs, which is not limited in this specification.

A key in any graph composition element key-value pair includes a plurality of identifier fields, and each identifier field can represent related information of the graph composition element in the graph. For example, a location of the graph composition element in the graph and a relationship between the graph composition element and another graph composition element can be determined, to be used in a subsequent query. In this embodiment, one field in a key in any graph composition element key-value pair can be a category identifier of a corresponding graph composition element. The category identifier is used to represent an identifier that is used by a person skilled in the art to classify graph composition elements into categories in a predetermined dimension, and is different from a node type determined based on a type of an entity represented by a node and an edge type determined based on a type of a relationship represented by an edge. Specifically, the node type and the edge type are used to represent an entity type represented by a corresponding node or edge. For example, in the above-mentioned embodiment of FIG. 3, node 311 represents user A and is a node of a "user" type, and node 313 represents Beijing and is a node of a "location" type. In this case, a graph composition element key-value pair of a node includes an identifier field used to represent an entity type, and also includes an identifier field used to represent other information (such as an element type). The category identifier is not equivalent to the identifier field used to represent the entity type described here. When a person skilled in the art sets a predetermined dimension to the entity type represented by the graph composition element, the category identifier can be the identifier field used to represent the entity type described here. When a person skilled in the art sets the predetermined dimension to the element type, the category identifier can be used to represent a field of an element type.

In one or more embodiments, the category identifier can be used as the first identifier field of a key. However, it should be noted that, when the first identifier field is defined, a sorting mechanism used when a storage engine stores key-value pairs should be taken into consideration. When sorting a plurality of key-value pairs, if the storage engine uses the leftmost byte included in a key as a start byte and follows a rule of aggregating keys having a same start byte, the first identifier field should be an identifier field located on the leftmost side, that is, a category identifier should be located on the leftmost side of the key. On the contrary, if the storage engine uses the rightmost byte included in a key as a start byte and follows a rule of aggregating keys having a same start byte, the first identifier field should be an identifier field located on the rightmost side, that is, a category identifier should be located on the rightmost side of the key. For ease of description, in subsequent embodiments of this specification, it is considered by default that the storage engine follows a first rule (that is, a location of a start byte is a front side, and a category identifier should be located on the leftmost side of a key). Certainly, the category identifier can also be used as an intermediate identifier field of a key, that is, there can be other identifier fields on a left side and a right side of the category identifier field. In this case, a person skilled in the art can determine a byte corresponding to the category identifier based on a specific location of the category identifier in a key, and reset, based on the determined byte, the sorting mechanism used when the storage engine stores key-value pairs, so that the storage engine can sort a plurality of keys based on category identifiers in the keys. For example, if the category identifier is the second identifier field in the key, and any identifier field corresponds to four bytes, the category identifier corresponds to 5 bytes to 8 bytes. In this case, the storage engine can be set to sort a plurality of keys based on the fifth byte to the eighth byte of the key.

In addition, it should be noted that the graph data is generally stored in a remote repository. To prevent an analysis system of the graph data from frequently reading data from the remote repository in an analysis process, the analysis system obtains in advance data that may be required in the analysis process and stores the data locally. Therefore, a plurality of graph composition element key-value pairs that are obtained by the analysis system for subsequent storage can be organized by different bodies.

In one or more embodiments, graph data in the remote repository is not organized by using a key-value pair, for example, the remote repository can store the graph data by using an attribute graph model and a resource description framework (RDF) model. In this case, after obtaining the graph data remotely, the analysis system of the graph data needs to organize the graph data in a form of a key-value pair, so that the graph data conforms to a structure described in the above-mentioned embodiments. In one or more other embodiments, when storing the graph data, the remote repository can have organized the graph data in a form of a key-value pair, and a key in the key-value pair conforms to a structure described in the above-mentioned embodiments. In this case, after obtaining the plurality of graph composition element key-value pairs from the remote repository, the analysis system can directly store the plurality of graph composition element key-value pairs in an orderly way based on an arrangement sequence of category identifiers included in keys.

Step 202: Store graph composition element key-value pairs in the plurality of graph composition element key-value pairs in an orderly way based on an arrangement sequence of category identifiers included in corresponding keys.

In one or more embodiments, the storage engine can optimize, based on a sorting algorithm built in the storage engine, arrangement logic of key-value pairs based on a category identifier included in each key. Specifically, the storage engine can organize keys according to a specific rule (for example, a value sequence or a dictionary sequence) by using a built-in data structure and technology such as a B+ tree or a skip list, so that key-value pairs are arranged in a specific sequence. When the category identifier is used as the first identifier field of a key, the first field in the key can be used as a basis for sorting. For example, if a data type of a key is defined as a character string type during storage, sorting can be performed first based on initial letters, and then sorting is performed based on subsequent letters. If the data type of the key is converted into a byte array before storage, sorting can be performed based on a value of the first byte, and then sorting is performed based on a value of a subsequent byte. On this basis, key-value pairs of a same category can be aggregated together and stored in a centralized way, so as to ensure that graph composition element key-value pairs of a same category or similar categories can be stored on adjacent physical locations in a storage medium. For a storage engine that supports batch operations, graph composition element key-value pairs of a same category or similar categories can be further integrated, and written to the storage medium in a batch writing way, so as to further improve writing efficiency at the time of storage.

It can be seen from the above-mentioned embodiments that in the technical solution provided in this specification, a form of a key that is in each graph composition element key-value pair and that includes a plurality of identifier fields is organized, a category identifier is used as one of the identifier fields, and then data of a graph composition element in a graph is stored in a centralized and orderly way based on an arrangement sequence of category identifiers included in a plurality of keys, so as to ensure that graph composition element key-value pairs of a same category can be continuously stored on adjacent physical locations in a storage medium. During reading of target data, if data stored on adjacent physical locations of the target data is pre-read, correlation between the pre-read data and the target data can be improved. Therefore, after the pre-read data is cached, a hit rate of subsequent cached data can be improved, thereby avoiding frequent hard disk reading operations, and significantly improving graph data reading efficiency.

In one or more embodiments, keys in different graph composition element key-value pairs include different identifier fields. Therefore, keys in different graph composition element key-value pairs also have different identifier fields that can be used as category identifiers.

First, it should be noted that, when reading data, the analysis system of the graph data may query a specific node, but generally does not query a specific edge. When an edge needs to be queried, all edges that satisfy a condition are usually read by using information that defines a type of an edge, directivity, a node connected to the edge, etc. Therefore, for any node, it is necessary to assign unique symbolic information to the node, such as a node ID, and for any edge, it is unnecessary to assign unique symbolic information to the edge.

Therefore, when the graph composition element is a node, the identifier field can include a node type and a node identifier. Node types are classified based on a type of an entity represented by a corresponding node, and the node identifier is used to represent unique symbolic information of the node. In this case, the category identifier can include a node type, and correspondingly, another identifier field in the key can include a node identifier. As shown in FIG. 3, an entity represented by node 311 in FIG. 3 is user A, and in this case, a node type of node 311 is "user". If an identifier corresponding to the node type "user" is "25", a category identifier of node 311 is "25". The node identifier can be an ID of the node, such as "311". In this case, the node type "25" is concatenated with a node identifier "311" to obtain "25-311", thereby obtaining a key in the graph composition element (node 311) key-value pair.

When the graph composition element is an edge, the identifier field can include an edge type, directivity, and a connected node, and any one of the above-mentioned identifier fields can be used as a category identifier. A node connected to any edge is two nodes directly connected to the edge, and directivity of the edge is used to mark a relationship between one node and another node. Certainly, although there is an undirected edge without a specific direction in the graph theory, in actual applications, a directed edge is usually used to represent a relationship between entities. In the directed edge, the edge can be further specified as an outgoing edge, an incoming edge, or a bidirectional edge based on a node connected to the directed edge. It should be noted here that a single edge can have dual roles: an incoming edge for one node and an outgoing edge for another node. As shown in FIG. 3, edge 321 is both an outgoing edge of node 311 and an incoming edge of node 312. In this case, in this embodiment of the specification, the edge is separately stored in different directivities. Therefore, for any node connected to the edge, all associated edges can be found based on the node, so as to form a more coherent edge data group, thereby improving subsequent reading efficiency. An edge type is obtained through division based on a type of a relationship represented by a corresponding edge. For example, in the above-mentioned description, the relationship represented by edge 321 in FIG. 3 is "reside in", and in this case, an edge type of edge 321 is "reside in"; and the relationship represented by edge 322 is "transaction exists", and in this case, an edge type of edge 322 is "transaction exists". Here, both an edge type and directivity can be identified by using corresponding identifiers, and a connected node can be identified by using unique symbolic information of the node, such as a node identifier.

Specifically, when the graph composition element is an edge, a person skilled in the art can select, based on actual situations and needs, a specific identifier indicated by a type identifier included in a key in the graph composition element key-value pair. For example, if the analysis system of the graph data usually reads data according to logic of "reading a node before reading an edge associated with the node", a connected node can be used as a type identifier of the edge; and if the analysis system usually reads data according to logic of "reading a node before reading an edge of a certain type", the edge type can be used as a type identifier of the edge. This is not limited in this specification.

In addition, it should be noted that, when the category identifier includes one of the above-mentioned three category identifiers (an edge type, directivity, and a connected node), another identifier field except the category identifier should be a combination of the remaining two category identifiers but does not include an information identifier corresponding to the category identifier. For example, if the connected node is used as the category identifier, another identifier field included in the key should no longer include the connected node, and should be a combination of an edge type and directivity; and if the edge type is used as the category identifier, other identifier fields included in the key should no longer include the edge type, and should be a combination of directivity and a connected node. In addition, a person skilled in the art can set, based on actual situations and needs, an arrangement sequence of other identifier fields included in the key.

For example, edge 321 in FIG. 3 is an outgoing edge of node 311, and a relationship represented by edge 321 is "reside in", that is, an edge type of edge 321 is "reside in". It is assumed that an identifier corresponding to the edge type of "reside in" is"90", a directivity identifier of the outgoing edge is "1", and a node identifier of node 311 is "311". In this case, if the edge type is used as the category identifier, the category identifier is used as the first identifier field of the key, and the directivity and the connected node are used as other identifier fields behind the category identifier and are concatenated, "90-1-311" or "90-311-1" can be obtained, and used as a key in the graph composition element (edge 321) key-value pair. However, if the connected node is used as the category identifier, the category identifier is used as the first identifier field of the key, and the edge type and the directivity are used as other identifier fields behind the category identifier and are concatenated, "311-90-1" or "311-1-90" can be obtained, and used as a key in the graph composition element (edge 321) key-value pair. Similarly, directivity of an edge can also be used as the category identifier. Details are omitted here for simplicity.

In addition, it should be noted that, in actual storage, each identifier included in the key in the graph composition element key-value pair needs to be converted into a byte array, and a specific quantity of bytes can be set by a person skilled in the art according to actual needs. For example, for an identifier "25" used to indicate a node type, if a data type used during declaration is an int type of 4 bytes, after the data type is converted into a byte array, [00000000, 00000000, 00000000, 00011001] is obtained, and a node identifier "311" is further used in combination to convert "25-311" into a byte array, so as to obtain [00000000, 00000000, 00000000, 00011001, 00000000, 00000000, 00000001, 00110111], which is a key actually used to store a graph composition element key-value pair corresponding to node 311. Because the byte array is a most basic data storage format in a computer, this step is only used to describe a specific format used during storage, and does not affect the above-mentioned method for storing a graph composition element key-value pair.

In one or more embodiments, the key in the graph composition element key-value pair can further include a first element type identifier or a second element type identifier. As shown in FIG. 4, when a graph composition element is a node, a key in a corresponding graph composition element key-value pair can further include the first element type identifier, so as to indicate that the corresponding graph composition element is a node; and when a graph composition element is an edge, a key in a corresponding graph composition element key-value pair can further include the second element type identifier, so as to indicate that the corresponding graph composition element is an edge. It can be understood that, when both a node and an edge are included in a graph, it may be necessary to quickly distinguish between a graph composition element key-value pair corresponding to the node and a graph composition element key-value pair corresponding to the edge. Therefore, a corresponding element type identifier can be added to a key in a corresponding key-value pair to indicate that a graph composition element is a node or an edge. The first element type identifier and the second element type identifier can be used as the category identifier, or can be used as other identifier fields. As shown in FIG. 4, if the category identifier is used as the first identifier field of a key, in the graph composition element key-value pair corresponding to the edge in FIG. 4, the second element identifier is a category identifier of the key. In addition, in the graph composition element key-value pair corresponding to the node in FIG. 4, a node type is used as the category identifier, and the first element identifier is located after the category identifier. This is not limited in this specification.

It can be seen from the above-mentioned embodiment that in the technical solutions provided in this specification, a form of a key in each graph composition element key-value pair is organized. Specifically, graph composition element key-value pairs corresponding to nodes of a same node type can be stored in a centralized and orderly way, so that when data is subsequently read, node data of a same type or similar types can be read into a cache together for use. In addition, in the technical solutions provided in this specification, during storage of a graph composition element key-value pair corresponding to an edge, not only a type of the edge, directivity, and a connected node are specified, but selection of a dimension for category classification based on needs can also be supported, and identifiers of different information can be used as category identifiers, so that the category identifiers can be more adaptable to reading logic of an analysis engine and better satisfy functional needs of graph data.

In one or more embodiments, data corresponding to any graph composition element may change. For example, for a node of a specific user type, node data includes level information, and in this case, the level information may change based on a user behavior, for example, be upgraded or degraded. The analysis system of the graph does not necessarily perform analysis based on latest data, or may select data within a certain time period to perform analysis based on specific needs. Therefore, when data of a graph composition element changes, current data should not directly overwrite previous data. Instead, new data is stored on a new physical location to ensure that old data can still be queried and used.

In this embodiment, predetermined fixed duration can be used as a time window, and a time window identifier is added to a key in a graph composition element key-value pair, and a value of the time window identifier can identify different time windows, as shown in FIG. 5. When a key in any graph composition element key-value pair includes the time window identifier, a value in the graph composition element key-value pair is incremental data of graph composition element data of the graph composition element within a current time window relative to graph composition element data of the graph composition element within a previous time window. The incremental data, as opposed to full data, refers to a portion that is newly added based on existing data, reflecting a latest change or update.

References can still be made to FIG. 3 here. Information already stored by user A (node 311) in FIG. 3 includes level information "3" and attribute information "adult". If an identifier of the current time window is "w1", and in the current time window, a level of a user changes to "4", and is still "adult", incremental data corresponding to the current time window is level information "4". In this case, the incremental data (level information "4") is used as a value, and a key including the time window identifier "w1" is used as a new key, and is stored again. Because the attribute information "adult" remains unchanged, the attribute information "adult" does not need to be stored this time. In this case, for user A (node 311), two graph composition element key-value pairs are obtained: One is a key-value pair in which a key does not include a time window identifier, and information included in a value in the key-value pair is level information "3" and attribute information "adult". The other is a key-value pair in which a key includes the time window identifier "w1", and information included in a value in the key-value pair is level information "4". Compared with storing full data, storing the incremental data can effectively reduce data processing time and occupation of storage space.

In one or more embodiments, the storage medium may store data other than the graph data. It can be understood that, although in the method in the above-mentioned embodiment, graph composition element key-value pairs can be stored in a centralized way based on the category identifier, a graph composition element key-value pair corresponding to a node and a graph composition element key-value pair corresponding to an edge may probably be dispersed in the storage medium. Therefore, to centrally store data of all graph composition elements included in a current graph, the graph composition element key-value pair can further include a placeholder. The placeholder is used to be added to a key in a graph composition element key-value pair corresponding to a node and/or a key in a graph composition element key-value pair corresponding to an edge, to adjust byte lengths of both keys to be consistent. In this embodiment of this specification, the placeholder can be located after a category identifier included in a corresponding key, to ensure that the storage engine still sorts and aggregates graph composition element key-value pairs based on the category identifier, and an organization sequence between the placeholder and another identifier field in the key can be set based on actual situations and needs. Generally, the placeholder is located after the another identifier field.

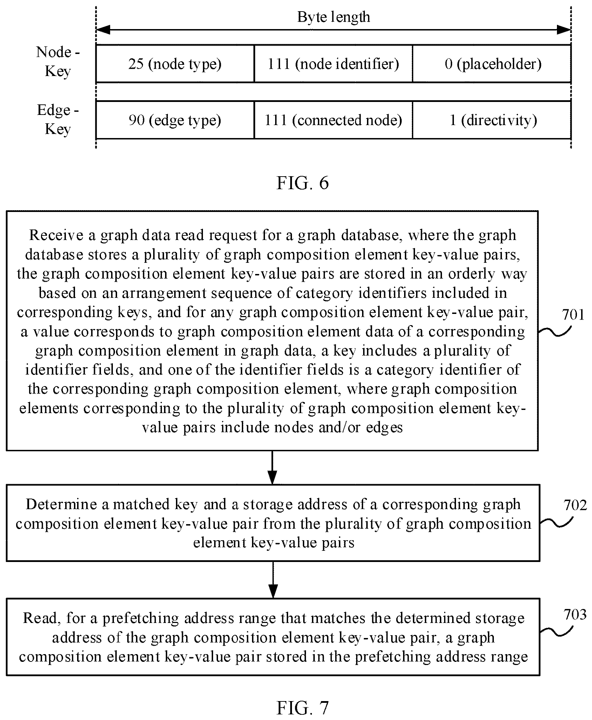

For example, a key in a graph composition element key-value pair corresponding to node 311 in FIG. 3 is "25-311", and specifically includes two identifier fields. A key in a graph composition element key-value pair corresponding to edge 321 is "90-311-1", and specifically includes three identifier fields. In this case, a placeholder, such as "0", can be added to a rear part of the key in the graph composition element key-value pair corresponding to node 311 to obtain "25-311-0", which is equivalent to that the key also includes three identifier fields. In this case, as shown in FIG. 6, a length of the graph composition element key-value pair corresponding to a node is consistent with a length of the graph composition element key-value pair corresponding to an edge. Based on this, when sorting and storing graph composition element key-value pairs, the storage engine can store the graph composition element key-value pair corresponding to a node and the graph composition element key-value pair corresponding to an edge to neighboring physical locations, thereby implementing centralized storage of the graph data on the whole. Certainly, in actual storage, the placeholder also needs to be converted into a byte array. Details are omitted here for simplicity.

Correspondingly, this specification further provides a graph data prefetching method. FIG. 7 is a flowchart illustrating a graph data prefetching method, according to one or more example embodiments. As shown in FIG. 7, the method can include the following steps:

Step 701: Receive a graph data read request for a graph database, where the graph database stores a plurality of graph composition element key-value pairs, the graph composition element key-value pairs are stored in an orderly way based on an arrangement sequence of category identifiers included in corresponding keys, and for any graph composition element key-value pair, a value corresponds to graph composition element data of a corresponding graph composition element in graph data, a key includes a plurality of identifier fields, and one of the identifier fields is a category identifier of the corresponding graph composition element, where graph composition elements corresponding to the plurality of graph composition element key-value pairs include nodes and/or edges.

Step 702: Determine a key in a matched graph composition element key-value pair and a storage address of a corresponding graph composition element key-value pair from the plurality of graph composition element key-value pairs.

Step 703: Read, for a prefetching address range that matches the determined storage address of the graph composition element key-value pair, a graph composition element key-value pair stored in the prefetching address range.

In the graph data prefetching method, for content related to a structure of a graph composition element key-value pair and a key in the graph composition element key-value pair, references can be made to the description in the above-mentioned embodiment. Details are omitted here for simplicity.

In one or more embodiments, a storage engine can determine, based on the graph data read request for the graph database, a target graph composition element that is to be read by an analysis system of the graph data, and further determine, from the plurality of graph composition element key-value pairs, a key in a key-value pair corresponding to the target graph composition element and a storage address of the graph composition element key-value pair. Here, the graph composition element to be read by the analysis system may be a single graph composition element, such as "node 311", or may be a plurality of graph composition elements, such as "all outgoing edges of node 311". Correspondingly, there can also be one or more keys matching the graph data read request and one or more storage addresses of corresponding graph composition element key-value pairs that are determined from the plurality of graph composition element key-value pairs, which is not limited in this application.

In one or more embodiments, the prefetching address range that matches the determined graph composition element key-value pair can be determined based on the storage address of the determined graph composition element key-value pair, and the graph composition element key-value pair stored in the prefetching address range is read. Here, the prefetching address range is generally a physical address range adjacent to the determined storage address, and is specifically related to a data reading way of a modern computer system. When the modem computer system reads data from a segment of consecutive addresses, not only data corresponding to the address is read, but also all data of a data block on which the address is located is read into a cache together. Therefore, a size of the prefetching address range can be determined based on a size of each data block during actual storage. Certainly, the prefetching address range can also be determined by a person skilled in the art based on actual situations and needs. For example, when a size of the graph data is large and a large amount of data information is required during analysis, the prefetching address range can be appropriately expanded; and when a size of the graph data is small and a small amount of data information is required during analysis, the prefetching address range can be appropriately narrowed, which is not limited in this specification.

In one or more embodiments, when the key in the graph composition element key-value pair further includes a time window identifier, a corresponding target time window identifier can be determined based on a target time range included in the graph data read request. For example, when a time window is obtained through division by day, if data of a specific node in last three days is to be obtained, and assuming that a latest window identifier corresponding to current time is "5", it can be determined that the target time window identifier is "3", "4", or "5". Then, a key that includes the target time window identifier and that corresponds to the graph composition element can be found in the plurality of graph composition element key-value pairs, and the storage address of the graph composition element key-value pair corresponding to the key is further determined. Then, the prefetching address range can be further determined based on the determined storage address, and the graph composition element key-value pair stored in the prefetching address range can be read. It should be noted that, for any graph composition element, after data of the graph composition element within a plurality of different time windows is read, a plurality of pieces of data need to be integrated, and an integrated value is used as final use data. An integration rule here can be set by a person skilled in the art according to needs. For example, a latest value is used as the integrated value, and an average value is used as the integrated value. This is not limited in this application.

In one or more other embodiments, there is also the following case: a key in a graph composition element key-value pair includes the time window identifier, but the graph data read request does not include a target time range. In this case, key-value pairs corresponding to all keys in the target graph composition element that have the time window identifier can be read, and data of values can be integrated. The integration rule here can also be set by a person skilled in the art according to needs, which is not limited in this application.

In the technical solutions provided in this specification, a form of a key in each graph composition element key-value pair is organized, and data of a graph composition element in a graph is stored in a centralized and orderly way, so as to ensure that graph composition element key-value pairs of a same category can be continuously stored on adjacent physical locations in a storage medium, and further, graph composition element key-value pairs in a specific range of adjacent physical locations can be read together into a cache during reading of data. It can be understood that, in a process of performing analysis based on graph data, after graph composition element data of a specific category is read, another graph composition element of a same category as the graph composition element data or related to the graph composition element data is probably accessed. However, in the method provided in this specification, related data of a same category can be read together into a cache for subsequent use, so that a cache hit rate is improved and frequent hard disk reading operations are avoided, thereby significantly improving graph data reading efficiency.

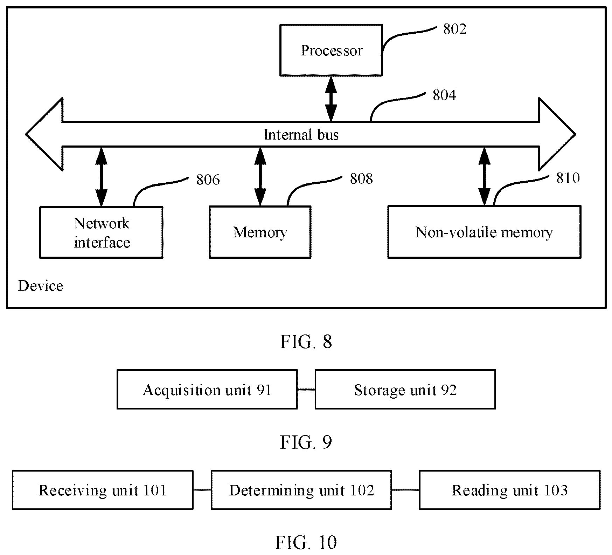

FIG. 8 is a schematic diagram illustrating a structure of a device, according to one or more example embodiments. As shown in FIG. 8, in terms of hardware, the device includes a processor 802, an internal bus 804, a network interface 806, a memory 808, and a non-volatile memory 810, and certainly may further include hardware needed for another function. One or more embodiments of this specification can be implemented in a software-based way. For example, the processor 802 reads a corresponding computer program from the non-volatile memory 810 into the memory 808, and then runs the computer program. Certainly, in addition to a software implementation, one or more embodiments of this specification do not exclude another implementation, for example, a logic device or a combination of hardware and software. That is, an execution body of the following processing procedure is not limited to each logical unit, and can be hardware or a logic device.

As shown in FIG. 9, a key-value pair storage apparatus for graph data can be applied to the device shown in FIG. 8, to implement the technical solutions in this specification. The key-value pair storage apparatus for graph data can include the following: an acquisition unit 91 configured to obtain a plurality of graph composition element key-value pairs, where in any graph composition element key-value pair, a value corresponds to graph composition element data of a corresponding graph composition element in graph data, a key includes a plurality of identifier fields, and one of the identifier fields is a category identifier of the corresponding graph composition element, where graph composition elements corresponding to the plurality of graph composition element key-value pairs include nodes and/or edges; and a storage unit 92 configured to store graph composition element key-value pairs in the plurality of graph composition element key-value pairs in an orderly way based on an arrangement sequence of category identifiers included in corresponding keys.

Optionally, when the graph composition element is a node, the category identifier includes a node type or a first element type identifier used to indicate that a corresponding graph composition element is a node; and when the graph composition element is an edge, the category identifier includes an edge type, directivity, a connected node, or a second element type identifier used to indicate that a corresponding graph composition element is an edge.

Optionally, when the graph composition element is a node, a key in a corresponding graph composition element key-value pair further includes a first element type identifier, so as to indicate that the corresponding graph composition element is a node; and/or when the graph composition element is an edge, a key in a corresponding graph composition element key-value pair can further include a second element type identifier, so as to indicate that the corresponding graph composition element is an edge.

Optionally, a key in at least one of the plurality of graph composition element key-value pairs further includes a time window identifier; and when a key in any graph composition element key-value pair includes the time window identifier, a value in the graph composition element key-value pair is incremental data of graph composition element data of a corresponding graph composition element within a current time window relative to graph composition element data of the graph composition element within a previous time window, where the current time window is indicated by a value of the time window identifier.

Optionally, the graph composition element key-value pair further includes a placeholder, and the placeholder is located after a category identifier included in a corresponding key, and is used to be added to a key in a graph composition element key-value pair corresponding to a node and/or a key in a graph composition element key-value pair corresponding to an edge, to adjust byte lengths of both keys to be consistent.

As shown in FIG. 10, a graph data prefetching apparatus can be applied to the device shown in FIG. 8, to implement the technical solutions in this specification. The graph data prefetching apparatus can include the following: a receiving unit 101 configured to receive a graph data read request for a graph database, where the graph database stores a plurality of graph composition element key-value pairs, the graph composition element key-value pairs are stored in an orderly way based on an arrangement sequence of category identifiers included in corresponding keys, and for any graph composition element key-value pair, a value corresponds to graph composition element data of a corresponding graph composition element in graph data, a key includes a plurality of identifier fields, and one of the identifier fields is a category identifier of the corresponding graph composition element, where graph composition elements corresponding to the plurality of graph composition element key-value pairs include nodes and/or edges; a determining unit 102 configured to determine a key in a matched graph composition element key-value pair and a storage address of a corresponding graph composition element key-value pair used from the plurality of graph composition element key-value pairs; and a reading unit 103 configured to read, for a prefetching address range that matches the determined storage address of the graph composition element key-value pair, a graph composition element key-value pair stored in the prefetching address range.

Optionally, when the graph composition element is a node, the category identifier includes a node type, a node identifier, or a first element type identifier used to indicate that a corresponding graph composition element is a node; and when the graph composition element is an edge, the category identifier includes an edge type, directivity, a connected node, or a second element type identifier used to indicate that a corresponding graph composition element is an edge.

Optionally, a key in the graph composition element key-value pair further includes a time window identifier; and the determining a key in a matched graph composition element key-value pair and a storage address of a corresponding graph composition element key-value pair from the plurality of graph composition element key-value pairs includes: determining a corresponding target time window identifier based on a target time range included in the graph data read request; and finding, in the plurality of graph composition element key-value pairs, a key that includes the target time window identifier, and further determining a storage address of a graph composition element key-value pair corresponding to the key.

The apparatus embodiment basically corresponds to the method embodiment. Therefore, for related parts, refer to some descriptions in the method embodiment. The described apparatus embodiments are merely examples. The modules described as separate parts can or cannot be physically separate, and parts displayed as modules can or cannot be physical modules, that is, can be located in one position, or can be distributed on a plurality of network modules. Some or all modules can be selected based on actual needs, to achieve objectives of the solutions in embodiments. A person of ordinary skill in the art can understand and implement the implementations of the embodiments of this specification without creative efforts.

The systems, apparatuses, modules, or units described in the above-mentioned embodiments can be specifically implemented by a computer chip or an entity, or can be implemented by a product having a certain function. A typical implementation device is a computer, and the computer can be a personal computer, a laptop computer, a cellular phone, a camera phone, a smartphone, a personal digital assistant, a media player, a navigation device, an email receiving and sending device, a game console, a tablet computer, a wearable device, or any combination of these devices.

Based on the same concept as the above-mentioned method, this specification further provides an electronic device, including: a processor; and a storage, configured to store instructions executable by the processor. The processor runs the executable instructions to implement the steps of the method in any one of the above-mentioned embodiments.

Based on the same concept as the above-mentioned method, this specification further provides a computer-readable storage medium. The computer-readable storage medium stores computer instructions, and when the instructions are executed by a processor, the steps of the method in any one of the above-mentioned embodiments are implemented.

Based on the same concept as the above-mentioned method, this specification further provides a computer program product, including a computer program/instructions. When the computer program/instructions is/are executed by a processor, the steps of the method in any one of the above-mentioned embodiments are implemented.

### EXAMPLES

1. A key-value pair storage method for graph data, comprising:
   obtaining a plurality of graph composition element key-value pairs, wherein in any graph composition element key-value pair, a value corresponds to graph composition element data of a corresponding graph composition element in graph data, a key comprises a plurality of identifier fields, and one of the identifier fields is a category identifier of the corresponding graph composition element, wherein graph composition elements corresponding to the plurality of graph composition element key-value pairs comprise nodes and/or edges; and
   storing graph composition element key-value pairs in the plurality of graph composition element key-value pairs in an orderly way based on an arrangement sequence of category identifiers comprised in corresponding keys.
2. The method according to example 1, wherein
   when the graph composition element is a node, the category identifier comprises a node type or a first element type identifier used to indicate that a corresponding graph composition element is a node; and
   when the graph composition element is an edge, the category identifier comprises an edge type, directivity, a connected node, or a second element type identifier used to indicate that a corresponding graph composition element is an edge.
3. The method according to example 1, wherein a key in at least one of the plurality of graph composition element key-value pairs further comprises a time window identifier; and
   when a key in any graph composition element key-value pair comprises the time window identifier, a value in the graph composition element key-value pair is incremental data of graph composition element data of a corresponding graph composition element within a current time window relative to graph composition element data of the graph composition element within a previous time window, wherein the current time window is indicated by a value of the time window identifier.
4. The method according to example 1, wherein the graph composition element key-value pair further comprises a placeholder, and the placeholder is located after a category identifier comprised in a corresponding key, and is used to be added to a key in a graph composition element key-value pair corresponding to a node and/or a key in a graph composition element key-value pair corresponding to an edge, to adjust byte lengths of both keys to be consistent.
5. A graph data prefetching method, comprising:
   receiving a graph data read request for a graph database, wherein the graph database stores a plurality of graph composition element key-value pairs, the graph composition element key-value pairs are stored in an orderly way based on an arrangement sequence of category identifiers comprised in corresponding keys, and for any graph composition element key-value pair, a value corresponds to graph composition element data of a corresponding graph composition element in graph data, a key comprises a plurality of identifier fields, and one of the identifier fields is a category identifier of the corresponding graph composition element, wherein graph composition elements corresponding to the plurality of graph composition element key-value pairs comprise nodes and/or edges;
   determining a key in a matched graph composition element key-value pair and a storage address of a corresponding graph composition element key-value pair from the plurality of graph composition element key-value pairs; and
   reading, for a prefetching address range that matches the determined storage address of the graph composition element key-value pair, a graph composition element key-value pair stored in the prefetching address range.
6. The method according to example 5, wherein
   when the graph composition element is a node, the category identifier comprises a node type, a node identifier, or a first element type identifier used to indicate that a corresponding graph composition element is a node; and
   when the graph composition element is an edge, the category identifier comprises an edge type, directivity, a connected node, or a second element type identifier used to indicate that a corresponding graph composition element is an edge.
7. The method according to example 5, wherein a key in the graph composition element key-value pair further comprises a time window identifier; and
   the determining a key in a matched graph composition element key-value pair and a storage address of the corresponding graph composition element key-value pair from the plurality of graph composition element key-value pairs comprises:
   determining a corresponding target time window identifier based on a target time range comprised in the graph data read request; and
   finding, in the plurality of graph composition element key-value pairs, a key that comprises the target time window identifier, and further determining a storage address of a graph composition element key-value pair corresponding to the key.
8. An electronic device, comprising: a processor, and a storage configured to store instructions executable by the processor, wherein the processor runs the executable instructions to implement the steps of the method according to any one of examples 1 to 7.
9. A computer-readable storage medium on which computer instructions are stored, wherein steps of the method according to any one of examples 1 to 7 are implemented when the instructions are executed by a processor.
10. A computer program product, comprising a computer program/instructions, wherein when the computer program/instructions is/are executed by a processor, the steps of the method according to any one of examples 1 to 7 are implemented.

## Claims

1. A key-value pair storage method for graph data, the method comprising:
obtaining (201) a plurality of graph composition element key-value pairs, wherein in any graph composition element key-value pair, a value corresponds to graph composition element data of a corresponding graph composition element in graph data, a key comprises a plurality of identifier fields, and one of the identifier fields is a category identifier of the corresponding graph composition element, wherein graph composition elements corresponding to the plurality of graph composition element key-value pairs comprise nodes and/or edges; and
storing (202) graph composition element key-value pairs in the plurality of graph composition element key-value pairs in an orderly way based on an arrangement sequence of category identifiers comprised in corresponding keys.

2. The method according to claim 1, wherein,
when the graph composition element is a node, the category identifier comprises a node type or a first element type identifier used to indicate that a corresponding graph composition element is a node; and,
when the graph composition element is an edge, the category identifier comprises an edge type, directivity, a connected node, or a second element type identifier used to indicate that a corresponding graph composition element is an edge.

3. The method according to claim 1, wherein a key in at least one of the plurality of graph composition element key-value pairs further comprises a time window identifier; and,
when a key in any graph composition element key-value pair comprises the time window identifier, a value in the graph composition element key-value pair is incremental data of graph composition element data of a corresponding graph composition element within a current time window relative to graph composition element data of the graph composition element within a previous time window, wherein the current time window is indicated by a value of the time window identifier.

4. The method according to claim 1, wherein the graph composition element key-value pair further comprises a placeholder, and the placeholder is located after a category identifier comprised in a corresponding key, and is used to be added to a key in a graph composition element key-value pair corresponding to a node and/or a key in a graph composition element key-value pair corresponding to an edge, to adjust byte lengths of both keys to be consistent.

5. A graph data prefetching method, comprising:
receiving (701) a graph data read request for a graph database, wherein the graph database stores a plurality of graph composition element key-value pairs, the graph composition element key-value pairs are stored in an orderly way based on an arrangement sequence of category identifiers comprised in corresponding keys, and for any graph composition element key-value pair, a value corresponds to graph composition element data of a corresponding graph composition element in graph data, a key comprises a plurality of identifier fields, and one of the identifier fields is a category identifier of the corresponding graph composition element, wherein graph composition elements corresponding to the plurality of graph composition element key-value pairs comprise nodes and/or edges;
determining (702) a key in a matched graph composition element key-value pair and a storage address of a corresponding graph composition element key-value pair from the plurality of graph composition element key-value pairs; and
reading (703), for a prefetching address range that matches the determined storage address of the graph composition element key-value pair, a graph composition element key-value pair stored in the prefetching address range.

6. The method according to claim 5, wherein,
when the graph composition element is a node, the category identifier comprises a node type, a node identifier, or a first element type identifier used to indicate that a corresponding graph composition element is a node; and,
when the graph composition element is an edge, the category identifier comprises an edge type, directivity, a connected node, or a second element type identifier used to indicate that a corresponding graph composition element is an edge.

7. The method according to claim 5, wherein a key in the graph composition element key-value pair further comprises a time window identifier; and
the determining a key in a matched graph composition element key-value pair and a storage address of the corresponding graph composition element key-value pair from the plurality of graph composition element key-value pairs comprises:
determining a corresponding target time window identifier based on a target time range comprised in the graph data read request; and
finding, in the plurality of graph composition element key-value pairs, a key that comprises the target time window identifier, and further determining a storage address of a graph composition element key-value pair corresponding to the key.

8. An electronic device, comprising: a processor, and a storage configured to store instructions executable by the processor, wherein the processor runs the executable instructions to implement the steps of the method according to any one of claims 1 to 7.

9. A computer-readable storage medium on which computer instructions are stored, wherein steps of the method according to any one of claims 1 to 7 are implemented when the instructions are executed by a processor.

10. A computer program product, comprising a computer program/instructions, wherein when the computer program/instructions is/are executed by a processor, the steps of the method according to any one of claims 1 to 7 are implemented.
